# EUROPEAN PATENT SPECIFICATION

(11) **EP 0 465 645 B1**
(45) Date of publication and mention of the grant of the patent: **30.12.1998**
(21) Application number: 91904860.3
(22) Date of filing: 30.01.1991
(51) Int. Cl.: C03C 3/095, C03C 4/02, C03C 1/10, C03C 4/08

(54) **BATCH COMPOSITION FOR MAKING INFRARED AND ULTRAVIOLET RADIATION ABSORBING GREEN GLASS**
ZUSAMMENSETZUNG FÜR DIE HERSTELLUNG VON INFRAROTE UND ULTRAVIOLETTE STRAHLEN ABSORBIERENDEM GRÜNEM GLAS
MELANGE POUR LA FABRICATION DE VERRE VERT ABSORBANT LES RADIATIONS INFRAROUGES ET ULTRAVIOLETTES

(30) Priority: 30.01.1990 US 472593
(43) Date of publication of application: 15.01.1992
(73) Proprietor: LIBBEY-OWENS-FORD CO., Toledo, OH 43695 (US)
(72) Inventor: Cheng, J. Joseph, Perrysburg, OH 43551 (US); Snow, Richard R., Perrysburg, OH 43551 (US); Evans, Geoffrey, New Longton, Preston PR4 4AN (GB); Bamford, Charles R., Merseyside PT8 3JL (GB); Milnes, Harold B., Wigan WN5 7PJ (GB)
(74) Representative: Joly, Jean-Jacques
(86) International application number: US9100624
(87) International publication number: WO9111402

(56) References cited:
- WO-A-91/07356
- US-A- 2 860 059
- US-A- 3 294 556
- US-A- 4 701 425
- US-A- 4 792 536
- CHEMICAL ABSTRACTS, vol. 110, no. 7, 3 April 1989, Columbus, Ohio, US; abstract no. 120010Q, page 339 ;

## Description

### Field of the Invention

The present invention relates generally to a glass batch composition for making infrared and ultraviolet radiation absorbing green glass.

### Background of the Invention

It is generally known to manufacture infrared radiation absorbing soda-lime-silica glass by the incorporation therein of iron. The iron is generally present in the glass as both ferrous oxide (FeO) and ferric oxide (Fe₂O₃). The total amount of iron and the balance between ferrous and ferric oxides has a direct and material effect on the color and transmittance properties of the glass. As the ferrous oxide content is increased (at the expense of the chemically reduced ferric oxide), the infrared absorption increases and the ultraviolet absorption decreases. The shift toward a higher concentration of FeO in relation to Fe₂O₃ also causes a change in the color of the glass from a yellow or yellow-green to a darker green or blue-green, which reduces the visible transmittance of the glass. Therefore, in order to obtain greater infrared absorption in glass, without sacrificing visual transmittance, it has been deemed necessary in the prior art to produce glass with a low total iron content which is highly reduced from Fe₂O₃ to FeO. A low total iron content glass is generally regarded as one having less than 0.75% by weight iron. As an example, U.S. Patent No. 3,652,303 discloses an infrared absorbing blue colored soda-lime-silica glass composition having a visible light transmittance greater than 70% at one quarter inch thickness, wherein at least 80% of the low total iron content in the glass is maintained in the ferrous state by the inclusion of a reducing quantity of tin metal or stannous chloride in the melt.

Many iron containing glass compositions additionally contain well known adjuvants such as titanium dioxide, molybdenum dioxide, and ceric oxide, for the purpose of providing ultraviolet energy absorption. These known ultraviolet energy absorbers have particular disadvantages, especially in the manufacture of automotive glazings, in that they cause the color of the glass to shift from a desirable green or blue-green to an unacceptable yellow color. Ceric oxide may be added, however, at a low enough concentration so as not to adversely affect the desirable green or blue-green color of such a glass.

U.S. Patent No. 1,936,231 discloses a colorless glass, wherein ferric oxide is added as an ultraviolet cut-off agent in quantities so small that the resultant glass retains its high visible light transmittance. The suggested total iron content is approximately 0.35% by weight. The patent further discloses that cerium compounds may be added in small quantities, as ultraviolet radiation cut-off agents, to low total iron containing glass compositions. Thus, the resultant glass compositions retain their colorless appearance and high visible light transmittance properties.

U.S. Patent No. 4,792,536 discloses a process for producing an infrared energy absorbing glass, containing a low total iron concentration which is highly reduced to FeO. It is further disclosed that the infrared energy absorption can be increased by including greater amounts of total iron in the glass composition, but states that the visible light transmittance would thereby be reduced below levels considered adequate for automotive glazings. The disclosed process utilizes a two stage melting and refining operation, which provides highly reducing conditions so as to increase the amount of iron in the ferrous state, for a given low total iron concentration of from 0.45% to 0.65% by weight. The patent teaches that the iron must be at least 35% reduced to FeO. Most preferably, greater than 50% of the total iron content must be reduced to the ferrous state. It is further disclosed that 0.25% to 0.5% by weight of ceric oxide may be added to the low total concentration, highly reduced iron containing glass, for the purpose of absorbing ultraviolet radiation. It is disclosed that higher concentrations of ceric oxide are to be avoided, as they would compromise the overall transmittance properties of the glass. As an example of the glass which may be produced by the process taught in U.S. Patent No. 4,792,536, Composition 11 discloses a low total iron containing glass, which is 30% reduced to FeO, and contains 1% ceric oxide. At a thickness of 4 mm, the total solar energy transmittance is about 52%, and the ultraviolet radiation transmittance is about 37%. The relatively high total solar energy transmittance value results from the low total iron concentration, while the relatively high ultraviolet radiation transmittance value is caused by the low concentration of Fe₂O₃, a large portion of which has been reduced to FeO.

The total iron content in a glass composition is generally expressed as weight percent total Fe₂O₃, which is the sum of weight percent ferric oxide and weight percent ferric oxide equivalent of ferrous oxide, and references to total iron in this specification and claims are in accordance with this convention and refer to total iron expressed as ferric oxide. When Fe₂O₃ is added to a glass batch composition, a portion of the Fe₂O₃ is reduced in the melt to FeO. The balance between ferrous and ferric oxides in the melt is a result of the oxidation-reduction equilibrium, and is expressed hereinafter as the "ferrous value" which is defined as weight percent ferrous oxide divided by weight percent total ferric oxide.

Ceric oxide is a powerful oxidizer, and when added to an iron containing soda-lime-silica glass batch composition, greatly affects the balance between ferrous oxide and ferric oxide. Carbon may be added to the glass batch, to compensate for the oxidizing effect of the ceric oxide. However, high amounts of carbon have a detrimental effect on the batch melting process, as carbon preferentially reacts with batch sulfates such as salt cake or gypsum which are standard additives to soda-lime-silica glasses to accelerate silica dissolution and also act as fining agents. Thus, excessive carbon is known to cause silica scum formation during the melting of the batch and silica inclusion faults in the finished glass product.

It is known that, in order to maintain the ratio of FeO to Fe₂O₃ and therefore the green color of the glass, the amount of carbon required to counteract the oxidizing effect of about one weight percent of ceric oxide in a typical low total iron containing soda-lime-silica glass produced by the float glass process is generally in the range of 0.9 pounds of carbon per 1,000 pounds of glass. This level of carbon, however, interferes with the "silica wetting" action of the salt cake or gypsum, and thereby results in silica scum formation during the melting process and silica inclusion faults in the final product, as discussed hereinabove.

In order to maintain a constant ratio of FeO to Fe₂O₃, i.e. ferrous value, while counteracting the oxidizing effect of a constant amount of ceric oxide, as the iron content of soda-lime-silica glass is increased to that of a high iron containing glass, e.g., to about 0.8% total iron, it is predicted either that the same amount of carbon must be added because the ceric oxide level is constant, or that the carbon requirement will be even greater because the equilibrium ferrous value decreases with increased iron addition, as disclosed in N. E. Densem and W. E. S. Turner, "The Equilibrium Between Ferrous and Ferric Oxides in Glasses", Journal of the Society of Glass Technology, vol. XXII, no. 914, Dec. 1938, pp. 372-389. Thus, it is predicted that a batch composition for producing a green-colored glass having high infrared energy absorption due to an FeO concentration (from the partial decomposition of Fe₂O₃ in the high total iron containing batch), and high ultraviolet radiation absorption partially due to a high concentration of ceric oxide (which is not so high as to cause the glass to appear yellow) and partially due to the large amount of Fe₂O₃ which remains in the higher oxidized state, will suffer from silica scum formation during melting and result in glass having silica inclusion faults, due to excessive carbon addition.

It would be desirable to produce a green-colored glass, utilizing conventional float glass technology, for use in auto-motive and architectural glazings, having a high Illuminant A visible light transmittance of at least 70%, a low total solar energy transmittance of less than about 46%, and a low ultraviolet radiation transmittance of less than about 34%, at a glass thickness of 4 mm. The prior art suggests that such a glass composition, employing a high iron concentration and about 1% ceric oxide, can only be produced by including a large amount of carbon in the melt, resulting in silica scum formation and silica inclusion faults in the final product.

### Summary of the Invention

It has surprisingly been discovered that the balanced redox reaction between ferrous and ferric iron, ceric oxide, and carbon in a soda-lime-silica float glass melt, shifts to a more reduced state when total iron content is increased from a low to a high total iron concentration, e.g., from about 0.5% iron to about 0.8% iron. Thus, the ferrous value increases, rather than decreases as suggested by the prior art. Therefore, in order to shift the redox reaction so as to obtain the same ferrous value manifested at the low total iron concentration, the quantity of carbon added to the melt having a high total iron content must be reduced, contrary to the wisdom of the prior art.

Less carbon, therefore, is required in a high total iron containing soda-lime-silica float glass melt, than that used in a low total iron containing melt, at a constant concentration of ceric oxide, in order to maintain a specific ferrous value. Carbon addition may be reduced from about 0.9 pounds to about 0.35 pounds per 1,000 pounds of glass, when the total iron concentration is increased from about 0.5% to about 0.8% by weight, at a constant ferrous value of about 25% and a constant ceric oxide concentration of about 1% by weight. This lower amount of added carbon eliminates the problem of silica scum formation during melting, and likewise eliminates the formation of silica inclusion faults in the final product.

### Statement of the invention

In accordance with the present invention, there is provided glass batch composition for producing an infrared energy and ultraviolet radiation absorbing green-colored glass, the glass having a composition substantially as defined in claim 1.

Also, in accordance with the present invention, there is provided a process for melting an infrared energy and ultraviolet radiation absorbing green-colored soda-lime-silica glass composition, comprising the steps substantially as defined in claim 14.

The batch composition of the invention may be melted and formed into a 4 mm thick glass article having an Illuminant A visible light transmittance greater than 70%, a total solar energy transmittance less than about 46%, and an ultraviolet radiation transmittance less than about 34%.

Total solar energy transmittance is a measure of energy transmittance over all solar energy wavelengths (ASTM E 424A), and is an integrated value representing the area under the transmittance versus wavelength curve for both visible and infrared wavelengths.

The batch compositions of the present invention are particularly suited for the productive of infrared and ultraviolet radiation absorbing green-colored automotive and architectural glazings by the float glass process.

### Detailed Description of the Preferred Embodiment

N.B. In what follows, the unit "pounds" shall be considered as equivalent to 0.454 kg.

For use as an automotive windshield, infrared energy and ultraviolet radiation absorbing glass must meet federal specifications which require an Illuminant A visible light transmittance greater than 70%. The thinner glasses used in modern automobiles have made it easier to achieve the 70% Illuminant A standard, but have also resulted in increased infrared energy and ultraviolet radiation transmittances. Consequently, automobile manufacturers have been forced to compensate for greater heat loads by appropriately sizing air conditioning equipment, and compelled to include more ultraviolet radiation stabilizers in fabrics and interior plastic components in order to prevent their degradation.

It is generally known in the art to produce a low total concentration highly reduced iron containing glass, having a high visible light transmittance and low infrared energy transmittance, by the float glass process. Cerium compounds are known to reduce the ultraviolet radiation transmittance of such glasses. However, the amount of carbonaceous reducing agent required for preparing such glasses has made their manufacture difficult, as the carbon preferentially reacts with the salt cake or gypsum fining agent to cause a silica rich layer (silica scum) to form on the top of the melt. Additionally, the glass products produced by such a process suffer from silica inclusion faults, making the products unfit for automotive or architectural glazings.

It has surprisingly been discovered that a high total iron containing glass, having high visible light transmittance and low infrared energy and ultraviolet radiation transmittances, may be prepared by melting together typical soda-lime-silica batch ingredients, and including a high amount of total iron, i.e., at least 0.75 weight percent to 1,2 weight percent, a quantity of a cerium containing compound, and an unexpectedly small amount of carbon (0,15 to 0,7 pounds per 1000 pounds of glass). The small amount of carbon, which is contrary to the teaching of the prior art, results in the elimination of silica scum formation during the melting of the batch composition, and the formation of silica inclusion faults in the finished glass product. Alternatively, the quantity of a cerium containing compound may be replaced by a lesser quantity of a mixture of a cerium containing compound and titanium dioxide, resulting in an even lower required amount of carbon.

Suitable batch ingredients, according to the present invention, which are compounded by conventional glass batch ingredient mixing devices, include sand, limestone, dolomite. soda ash, rouge, carbon, salt cake or gypsum, and a cerium containing compound, and optionally titanium dioxide. These materials are conveniently melted together in a conventional float glass tank, to form a green-colored infrared energy and ultraviolet radiation absorbing glass composition, which thereafter may be continuously cast onto the molten metal bath of a float process. The flat glass thus produced may be formed into architectural glazings, or cut and formed, such as for example by press bending, into automotive glazings.

Soda-lime-silica float glass batch mixtures are well known in the art of glass making. A typical soda-lime-silica float glass batch mixture comprises:

| | |
|---|---|
| Sand | 1,000 ± 200 pounds |
| Soda Ash | 330 ± 50 pounds |
| Dolomite | 250 ± 50 pounds |
| Limestone | 70 ± 50 pounds |
| Sulfate | 12 ± 8 pounds |

The sulfate may be for example salt cake or gypsum. This batch yields approximately 1,400 pounds of glass after melting and fining in a float glass facility.

A cerium containing compound is added to the batch composition to impart ultraviolet radiation absorbency to the ultimately produced glass product. The cerium containing compound is added in an amount great enough to effectively absorb ultraviolet radiation, but less than an amount which would otherwise substantially affect the color of the glass by causing a yellowish tinge. Suitable cerium containing compounds include, but are not limited to, cerous carbonate, ceric oxide, cerous oxalate, ceric hydrate, and the like. A preferred cerium containing compound is cerous carbonate, and is generally added to the batch composition so as to result in a ceric oxide concentration from about 0.2% to about 1.4% and more particularly from about 0.8% to about 1.2% by weight of the glass. A preferred ceric oxide concentration is about 1% by weight. Alternatively, a mixture of a cerium containing compound and titanium dioxide may be added in place of the aforementioned amount of a cerium containing compound alone, so as to result in a concentration from about 0.1 to about 1.36 weight percent CeO₂ and from about 0.02 to about 0.85 weight percent TiO₂, preferably from about 0.5 to about 0.6 weight percent CeO₂ and from about 0.15 to about 0.25 weight percent TiO₂ in the glass. The mixture of the ceric oxide and titanium dioxide in the glass has the same operability and utility as the greater required amount of ceric oxide alone.

Iron is added to the batch composition, typically as Fe₂O₃, iron oxalate, metallic iron, or the like. When the batch composition is melted in the float glass tank, the redox reaction between the iron, cerium containing compound, and carbon results in the reduction of a portion of the Fe₂O₃ to FeO, until an equilibrium ferrous value is established. Thus, the iron is added to the batch composition so as to produce a high total iron concentration of at least 0.75%, generally 0.75% to 1.1% or 1.2%. In a preferred embodiment, the total iron content is from 0.75% to about 0.9% by weight of the glass. Most preferably, the concentration is from 0.75% to about 0.85% by weight of the glass. The ferrous value, which imparts the green color to the high total iron containing glass produced from the batch compositions of the present invention, is generally from about 22% to about 29%. preferably, the ferrous value is from about 24% to about 27%.

It is generally known that the amount of carbon which must be added to a low total iron containing soda-lime-silica float glass melt, i.e., a batch composition for producing a glass containing about 0.5% by weight total iron and about 1% by weight ceric oxide, is in the range of about 0.9 pounds of carbon per 1,000 pounds of glass, in order to produce a green-colored glass. However, the amount of carbon which must be added to a high total iron containing soda-lime-silica float glass melt, which additionally contains a cerium containing compound so as to produce a glass containing about 1% by weight ceric oxide, according to the present invention, is surprisingly less than the amount required for the aforementioned low total iron containing glass. The range of carbon required for the batch compositions of the present invention is generally from about 0.15 to about 0.7 pounds per 1,000 pounds of glass, and must often from about 0.15 to about 0.5 pounds per 1,000 pounds of glass, to produce a green-colored glass having a ferrous value from about 22% to about 29%. By the term "carbon" as used herein is also meant other carbonaceous materials generally known as providing carbon for glass batches, such as for example sea coal, wood flour, etc. More, specifically, the amount of carbon required when using a cerium containing compound alone is from about 0.3 to about 0.5 pounds per 1,000 pounds of glass, and the amount of carbon required when using a cerium containing compound in combination with titanium dioxide is generally from about 0.15 to about 0.45 pounds per 1,000 pounds of glass, and most often from about 0.15 to about 0.3 pounds per 1,000 pounds of glass.

The batch compositions of the present invention, when charged to a float glass facility, produce green-colored glass having an Illuminant A visible light transmittance greater than 70%, a total solar energy transmittance less than about 46%, and an ultraviolet radiation transmittance less than about 34%, at a glass thickness of 4 mm. The green color is characterized by an Illuminant C dominant wavelength from about 498 nm to about 540 or 550 nm, preferably about 498 to about 518 nm, and a color purity from about 2% to about 4%, preferably about 2% to about 3%.

### Examples 1-9

Various amounts of rouge, cerous carbonate, titanium dioxide and carbon are added to a typical soda-lime-silica, float glass batch mixture comprising:

| | |
|---|---|
| Sand | 1,000 pounds |
| Soda Ash | 326 pounds |
| Dolomite | 248 pounds |
| Limestone | 67 pounds |
| Salt Cake | 8 pounds |

The amounts of rouge, cerous carbonate, titanium dioxide and carbon added are as follows:

**Table I**

| Glass Batch Ingredients | | | | | |
|---|---|---|---|---|---|
| | Cerous Carbonate (pounds) | TiO₂ (pounds) | Rouge (pounds) | Carbon (pounds) | Pounds Carbon per 1,000 Pounds Glass |
| Example 1 | 24 | -0- | 11.5 | 0.42 | 0.30 |
| Example 2 | 24 | -0- | 11.5 | 0.49 | 0.35 |
| Example 3 | 24 | -0- | 11.5 | 0.56 | 0.40 |
| Example 4 | 24 | -0- | 11.5 | 0.63 | 0.45 |
| Example 5 | 24 | -0- | 11.5 | 0.63 | 0.45 |
| Example 6 | 24 | -0- | 11.5 | 0.70 | 0.50 |
| Example 7 | 16 | 4.2 | 14.5 | 0.63 | 0.45 |
| Example 8 | 16 | 4.2 | 14.5 | 0.63 | 0.45 |
| Example 9 | 24 | -0- | 14.5 | 0.98 | 0.70 |

Silica scum does not form during the melting of the aforementioned batch ingredients, and silica inclusion faults are not observed in the resultant glass.

The properties of the resultant glasses at a thickness of 4 mm are as follows:

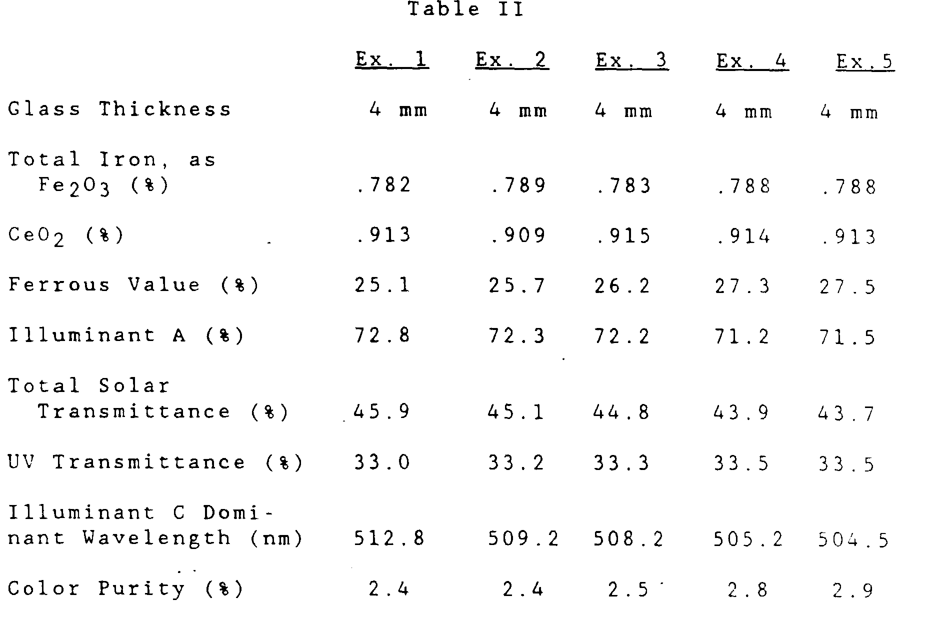

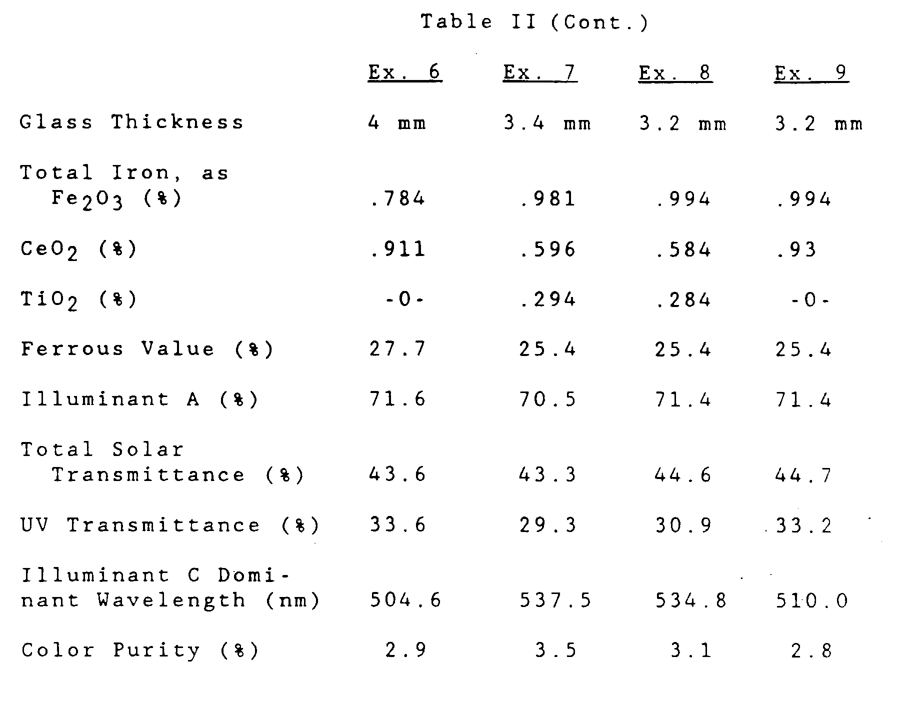

## Claims

1. A glass batch composition, for producing an infrared energy and ultraviolet radiation absorbing green-colored glass, the glass having a ferrous value from about 22 % to about 29 %, comprising :
A) a soda-lime-silica float glass batch mixture adapted for continuous casting in a float glass process;
B) an ultraviolet radiation absorbing quantity of a cerium containing compound, in an amount which does not substantially affect the color of the glass whilst ensuring ultraviolet absorbancy to the finished glass product;
C) an amount of iron so as to result in at least 0.75 to 1.2 weight percent total iron in the glass; and
D) a quantity of carbon of 0.068 to 0.318 kg per 454 kg (0.15 to 0.7 pounds per 1000 pounds) of glass, which is less than the amount of carbon required to achieve the same ferrous value in a glass produced from a glass batch comprising ingredients A, B, and an amount of iron so as to result in 0.5 weight percent total iron in the glass.

2. The glass batch composition according to claim 1, wherein said soda-lime-silica float glass batch mixture comprises :
A) 454 ± 91 kg (1000 ± 200 pounds) of sand;
B) 150 ± 23 kg (330 ± 50 pounds) of soda ash;
C) 113 ± 23 kg (250 ± 50 pounds) of dolomite;
D) 32 ± 23 kg (70 ± 50 pounds) of limestone; and
E) 5.4 ± 3.6 kg (12 ± 8 pounds) of a sulfate selected from the group consisting of salt cake and gypsum.

3. The glass batch composition according to claim 1 or 2, wherein said cerium containing compound is selected from the group consisting of cerous carbonate, ceric oxide, cerous oxalate and ceric hydrate.

4. The glass batch composition according to claim 3, wherein said cerium containing compound is cerous carbonate.

5. The glass batch composition according to any one of claims 1 to 4, wherein said cerium containing compound is added so as to result in a concentration of cerium oxide in the glass from about 0.8 % to about 1.2 % by weight.

6. The glass batch composition according to any one of claims 1 to 5, wherein said iron is added so as to result in a concentration of total iron in the glass from 0.75 % to about 0.9 % by weight.

7. The glass batch composition according to claim 6, wherein said iron is added so as to result in a concentration of total iron in the glass from 0.75 % to about 0.85 % by weight.

8. The glass batch composition according to any one of claims 1 to 7, wherein the ferrous value in the glass is from about 24 % to about 27 %.

9. The glass batch composition according to any one of claims 1 to 8, wherein said carbon content is from about 0.035 kg to about 0.20 kg (about 0.3 to about 0.5 pounds) per 390 kg (1000 pounds) of glass.

10. The glass batch composition according to claim 8, wherein said carbon content is from about 0.059 kg to about 0.20 kg (0.15 pounds to about 0.5 pounds) per 390 kg (1000 pounds) of glass.

11. The glass batch composition according to any one of claims 1 to 10, further comprising a quantity of titanium dioxide, wherein the resultant glass contains from about 0.5 to about 0.6 weight percent CeO₂ and from about 0.15 to about 0.25 weight percent TiO₂.

12. A glazing, produced from the glass batch composition of any one of claims 1 to 11, wherein the Illuminant A visible light transmittance of said glazing is greater than 70%, the total solar energy transmittance of said glazing is less than about 46%, and the ultraviolet radiation transmittance of said glazing is less than about 34%, at a thickness of 4 mm.

13. A vehicle glazing, produced from the glass batch composition of any one of claims 1 to 11, wherein said glazing at a thickness of 4 mm has an Illuminant A visible light transmittance greater than 70%, a total solar energy transmittance less than about 46%, an ultraviolet radiation transmittance less than about 34%, an Illuminant C dominant wavelength from about 498 to about 518 nanometers, and a color purity from about 2% to about 3%.

14. A process for melting an infrared energy and ultraviolet radiation absorbing green colored soda-lime-silica glass composition, the composition when melted having a ferrous value from about 22 % to about 29 %, comprising admixing and heating :
A) a soda-lime-silica float glass batch mixture adapted for continuous casting in a float glass process;
B) an ultraviolet radiation absorbing quantity of a cerium containing compound, in an amount which does not substantially affect the color of the glass whilst ensuring ultraviolet absorbancy to the finished glass product;
C) an amount of iron so as to result in at least 0.75 to 1.2 weight percent total iron in the glass; and
D) a quantity of carbon of 0.068 to 0.318 kg per 454 kg (0.15 to 0.7 pounds per 1000 pounds) of glass, which is less than the amount of carbon required to achieve the same ferrous value in a glass produced from a glass batch composition comprising ingredients A, B and a lesser amount of iron than recited in C;
thereby avoiding the formation of silica scum on the surface of the melt in an amount sufficient to have a deleterious effect on the quality of glass formed by the float process.

15. The process for melting a glass composition according to claim 14, wherein said soda-lime-silica float glass batch mixture comprises :
A) 454 ± 91 kg (1000 ± 200 pounds) of sand;
B) 150 ± 23 kg (330 ± 50 pounds) of soda ash;
C) 113 ± 23 kg (250 ± 50 pounds) of dolomite;
D) 32 ± 23 kg (70 ± 50 pounds) of limestone; and
E) 5.4 ± 3.6 kg (12 ± 8 pounds) of a sulfate selected from the group consisting of salt cake and gypsum.

16. The process for melting a glass composition according to claim 14 or 15, wherein said cerium containing compound is selected from the group consisting of cerous carbonate, ceric oxide, cerous oxalate, and ceric hydrate.

17. The process for melting a glass composition according to claim 16, wherein said cerium containing compound is cerous carbonate.

18. The process for melting a glass composition according to any one of claims 14 to 17, wherein said cerium containing compound is added so as to result in a concentration of cerium oxide in the glass from about 0.8 % to about 1.2 % by weight.

19. The process for melting a glass composition according to any one of claims 14 to 18, wherein said iron is added so as to result in a concentration of total iron in the glass from 0.75 % to about 0.9 % by weight.

20. The process for melting a glass composition according to claim 19, wherein said iron is added so as to result in a concentration of total iron in the glass from 0.75 % to about 0.85 % by weight.

21. The process for melting a glass composition according to any one of claims 14 to 20, wherein the ferrous value in the glass is from about 24 % to about 27 %.

22. The process for melting a glass composition according to any one of claims 14 to 21, wherein said carbon content is from about 0.035 kg to about 0.20 kg (about 0.3 to about 0.5 pounds) per 390 kg (1000 pounds) of glass.

23. The process for melting a glass composition according to claim 22, wherein said carbon is from about 0.059 kg to about 0.20 kg per 390 kg (about 0.15 pounds to about 0.5 pounds per 1000 pounds) of glass.

24. The process for melting a glass composition according to any one of claims 14 to 23, further comprising admixing and heating a quantity of titanium dioxide, wherein the resultant glass contains from about 0.5 to about 0.6 weight percent CeO₂ and from about 0.15 to about 0.25 weight percent TiO₂.

## Patentansprüche

1. Glasgemengezusammensetzung zur Herstellung eines Infrarotenergie und Ultraviolettstrahlung absorbierenden grünfarbigen Glases mit einem Eisenwert von etwa 22% bis etwa 29%, die enthält:
A) eine Natron-Kalk-Siliciumdioxid-Floatglasgemengemischung, die für kontinuierliches Gießen in einem Floatglas-Verfahren angepaßt ist;
B) eine Ultraviolettstrahlung absorbierende Menge einer Cer enthaltenden Verbindung in einer Menge, die die Farbe des Glases nicht wesentlich beeinflußt, während sie Ultraviolett-Absorptionsvermögen des fertigen Glasprodukts sicherstellt;
C) eine solche Menge Eisen, daß sie zu mindestens 0,75 bis 1,2 Gewichtsprozent Gesamteisen in dem Glas führt; und
D) eine Menge an Kohlenstoff von 0,068 bis 0,318 kg pro 454 kg (0,15 bis 0,7 Pound pro 1000 Pound) Glas, die geringer ist als die Menge an Kohlenstoff, die erforderlich ist, um den selben Eisenwert in einem Glas zu erzielen, das hergestellt wurde aus einem Glasgemenge, das die Bestandteile A, B und eine solche Menge Eisen, daß sie zu 0,5 Gewichtsprozent Gesamteisen in dem Glas führt, enthält.

2. Glasgemengezusammensetzung nach Anspruch 1, bei der die Natron-Kalk-Siliciumdioxid-Floatglasgemengemischung enthält:
A) 454 ± 91 kg (1000 ± 200 Pound) Sand;
B) 150 ± 23 kg (330 ± 50 Pound) Sodaasche;
C) 113 ± 23 kg (250 ± 50 Pound) Dolomit;
D) 32 ± 23 kg (70 ± 50 Pound) Kalkstein; und
E) 5,4 ± 3,6 kg (12 ± 8 Pound) eines Sulfats, das ausgewählt ist aus der aus Salzkuchen und Gips bestehenden Gruppe.

3. Glasgemengezusammensetzung nach Anspruch 1 oder 2, bei der die Cer enthaltende Verbindung ausgewählt ist aus der Gruppe, die besteht aus Cer(III)-Carbonat, Cer(IV)-Oxid, Cer(III)-Oxalat und Cer(IV)-Hydrat.

4. Glasgemengezusammensetzung nach Anspruch 3, bei der die Cer enthaltende Verbindung Cer(III)-Carbonat ist.

5. Glasgemengezusammensetzung nach einem der Ansprüche 1 bis 4, bei der die Cer enthaltende Verbindung dergestalt zugegeben ist, daß sie zu einer Konzentration von Ceroxid in dem Glas von etwa 0,8 Gewichtsprozent bis etwa 1,2 Gewichtsprozent führt.

6. Glasgemengezusammensetzung nach einem der Ansprüche 1 bis 5, bei der das Eisen dergestalt zugegeben ist, daß es zu einer Gesamteisen-Konzentration in dem Glas von 0,75 Gewichtsprozent bis etwa 0,9 Gewichtsprozent führt.

7. Glasgemengezusammensetzung nach Anspruch 6, bei der das Eisen dergestalt zugegeben ist, daß es zu einer Gesamteisen-Konzentration in dem Glas von 0,75 Gewichtsprozent bis etwa 0,85 Gewichtsprozent führt.

8. Glasgemengezusammensetzung nach einem der Ansprüche 1 bis 7, bei der der Eisenwert in dem Glas von etwa 24% bis etwa 27% beträgt.

9. Glasgemengezusammensetzung nach einem der Ansprüche 1 bis 8, bei der der Kohlenstoffgehalt von etwa 0,035 kg bis etwa 0,20 kg (etwa 0,3 bis etwa 0,5 Pound) pro 390 kg (1000 Pound) Glas beträgt.

10. Glasgemengezusammensetzung nach Anspruch 8, bei der der Kohlenstoffgehalt von etwa 0,059 kg bis etwa 0,20 kg (0,15 Pound bis etwa 0,5 Pound) pro 390 kg (1000 Pound) Glas beträgt.

11. Glasgemengezusammensetzung nach einem der Ansprüche 1 bis 10, die außerdem eine Menge an Titandioxid enthält, wobei das sich ergebende Glas von etwa 0,5 bis etwa 0,6 Gewichtsprozent CeO₂ und von etwa 0,15 bis etwa 0,25 Gewichtsprozent TiO₂ enthält.

12. Verglasung, die hergestellt ist aus der Glasgemengezusammensetzung nach einem der Ansprüche 1 bis 11, wobei bei einer Dicke von 4 mm die Durchlässigkeit der Verglasung für sichtbares Licht der Lichtart A größer ist als 70%, die Gesamtsonnenenergie-Durchlässigkeit der Verglasung geringer ist als etwa 46% und die Durchlässigkeit der Verglasung für Ultraviolettstrahlung geringer ist als etwa 34%.

13. Fahrzeugverglasung, die hergestellt ist aus der Glasgemengezusammensetzung nach einem der Ansprüche 1 bis 11, wobei die Verglasung bei einer Dicke von 4 mm eine Durchlässigkeit für sichtbares Licht der Lichtart A von größer als 70%, eine Gesamtsonnenenergie-Durchlässigkeit von weniger als etwa 46%, eine Durchlässigkeit für Ultraviolettstrahlung von weniger als etwa 34%, eine vorherrschende Wellenlänge der Lichtart C von etwa 498 bis etwa 518 Nanometer und eine Farbreinheit von etwa 2% bis etwa 3% hat.

14. Verfahren zum Schmelzen einer Infrarotenergie und Ultraviolettstrahlung absorbierenden grünfarbigen Natron-Kalk-Siliciumdioxid-Glaszusammensetzung, die nach dem Schmelzen einen Eisenwert von etwa 22% bis etwa 29% hat, aufweisend das Zusammenmischen und Erhitzen:
A) einer Natron-Kalk-Siliciumdioxid-Floatglasgemengemischung, die für kontinuierliches Gießen in einem Floatglas-Verfahren angepaßt ist;
B) einer Ultraviolettstrahlung absorbierenden Menge einer Cer enthaltenden Verbindung in einer Menge, die die Farbe des Glases nicht wesentlich beeinflußt, während sie das Ultraviolettabsorptionsvermögen des fertigen Glasprodukts sicherstellt;
C) einer solchen Menge Eisen, daß sie zu mindestens 0,75 bis 1,2 Gewichtsprozent Gesamteisen in dem Glas führt; und
D) einer Menge an Kohlenstoff von 0,068 bis 0,318 kg pro 454 kg (0,15 bis 0,7 Pound pro 1000 Pound) Glas, die geringer ist als die Menge an Kohlenstoff, die erforderlich ist, um denselben Eisenwert in einem Glas zu erzielen, das hergestellt wurde aus einer Glasgemengezusamrnensetzung, die die Bestandteile A, B und eine geringere Menge an Eisen, als sie in C genannt ist, enthält;
wodurch die Bildung von Siliciumdioxid-Schaum an der Oberfläche der Schmelze in einer Menge, die ausreichend ist, um eine schädliche Auswirkung auf die Qualität des in dem Float-Verfahren gebildeten Glases zu haben, vermieden wird.

15. Verfahren zum Schmelzen einer Glaszusammensetzung nach Anspruch 14, bei dem die Natron-Kalk-Siliciumdioxid-Floatglasgemengezusammensetzung enthält:
A) 454 ± 91 kg (1000 ± 200 Pound) Sand;
B) 150 ± 23 kg (330 ± 50 Pound) Sodaasche;
C) 113 ± 23 kg (250 ± 50 Pound) Dolomit;
D) 32 ± 23 kg (70 ± 50 Pound) Kalkstein; und
E) 5,4 ± 3,6 kg (12 ± 8 Pound) eines Sulfats, das ausgewählt ist aus der aus Salzkuchen und Gips bestehenden Gruppe.

16. Verfahren zum Schmelzen einer Glaszusammensetzung nach Anspruch 14 oder 15, bei dem die Cer enthaltende Verbindung ausgewählt ist aus der Gruppe, die besteht aus Cer(III)-Carbonat, Cer(IV)-Oxid, Cer(III)-Oxalat und Cer(IV)-Hydrat.

17. Verfahren zum Schmelzen einer Glaszusammensetzung nach Anspruch 16, bei dem die Cer enthaltende Verbindung Cer(III)-Carbonat ist.

18. Verfahren zum Schmelzen einer Glaszusammensetzung nach einem der Ansprüche 14 bis 17, bei dem die Cer enthaltende Verbindung dergestalt zugegeben wird, daß sie zu einer Konzentration an Ceroxid in dem Glas von etwa 0,8 Gewichtsprozent bis etwa 1,2 Gewichtsprozent führt.

19. Verfahren zum Schmelzen einer Glaszusammensetzung nach einem der Ansprüche 14 bis 18, bei dem das Eisen dergestalt zugegeben wird, daß es zu einer Gesamteisen-Konzentration in dem Glas von 0,75 Gewichtsprozent bis etwa 0,9 Gewichtsprozent führt.

20. Verfahren zum Schmelzen einer Glaszusammensetzung nach Anspruch 19, bei dem das Eisen dergestalt zugegeben wird, daß es zu einer Gesamteisen-Konzentration in dem Glas von 0,75 Gewichtsprozent bis etwa 0,85 Gewichtsprozent führt.

21. Verfahren zum Schmelzen einer Glaszusammensetzung nach einem der Ansprüche 14 bis 20, bei dem der Eisenwert in dem Glas von etwa 24% bis etwa 27% beträgt.

22. Verfahren zum Schmelzen einer Glaszusammensetzung nach einem der Ansprüche 14 bis 21, bei dem der Gehalt an Kohlenstoff von etwa 0,035 kg bis etwa 0,20 kg (etwa 0,3 bis etwa 0,5 Pound) pro 390 kg (1000 Pound) Glas beträgt.

23. Verfahren zum Schmelzen einer Glaszusammensetzung nach Anspruch 22, bei dem der Kohlenstoff von etwa 0,059 kg bis etwa 0,20 kg pro 390 kg (etwa 0,15 Pound bis etwa 0,5 Pound pro 1000 Pound) Glas beträgt.

24. Verfahren zum Schmelzen einer Glaszusammensetzung nach einem der Ansprüche 14 bis 23, außerdem aufweisend das Zumischen und Erhitzen einer Menge an Titandioxid, wobei das sich ergebende Glas von etwa 0,5 bis etwa 0,6 Gewichtsprozent CeO₂ und von etwa 0,15 bis etwa 0,25 Gewichtsprozent TiO₂ enthält.

## Revendications

1. Composition de charge de verre pour produire un verre de couleur verte absorbant l'énergie infrarouge et les radiations ultraviolettes, le verre ayant une valeur ferreuse d'environ 22 % à environ 29 %, comprenant :
A) un mélange de charge de verre flotté de soude-chaux-silice conçu pour la coulée continue dans un procédé de flottage de verre ;
B) une quantité absorbant les radiations ultraviolettes d'un composé contenant du cérium en une quantité qui n'influe sensiblement pas sur la couleur du verre tout en conférant au produit en verre fini une capacité d'absorption des ultraviolets ;
C) une quantité de fer telle qu'il en résulte au moins 0,75 à 1,2 % en masse de fer total dans le verre ; et
D) une quantité de carbone de 0,068 à 0,318 kg pour 454 kg (0,15 à 0,7 livre pour 1000 livres) de verre, qui est inférieure à la quantité de carbone nécessaire pour obtenir la même valeur ferreuse dans un verre produit à partir d'une charge de verre comprenant les ingrédients A, B et une quantité de fer telle qu'il en résulte 0,5 % en masse de fer total dans le verre.

2. Composition de charge de verre selon la revendication 1, dans laquelle ledit mélange de charge de verre flotté de soude-chaux-silice comprend :
A) 454 ± 91 kg (1 000 ± 200 livres) de sable ;
B) 150 ± 23 kg (330 ± 50 livres) de soude calcinée ;
C) 113 ± 23 kg (250 ± 50 livres) de dolomie ;
D) 32 ± 23 kg (70 ± 50 livres) de chaux ; et
E) 5,4 ± 3,6 kg (12 ± 8 livres) d'un sulfate choisi dans le groupe consistant en le salignon et le gypse.

3. Composition de charge de verre selon la revendication 1 ou 2, dans laquelle ledit composé contenant du cérium est choisi dans le groupe consistant en le carbonate céreux, l'oxyde cérique, l'oxalate céreux et l'hydrate cérique.

4. Composition de charge de verre selon la revendication 3, dans laquelle ledit composé contenant du cérium est le carbonate céreux.

5. Composition de charge de verre selon l'une quelconque des revendications 1 à 4, dans laquelle ledit composé contenant du cérium est ajouté de manière à produire dans le verre une concentration d'oxyde de cérium d'environ 0,8 % à environ 1,2 % en masse.

6. Composition de charge de verre selon l'une quelconque des revendications 1 à 5, dans laquelle ledit fer est ajouté de manière à produire dans le verre une concentration de fer total de 0,75 % à environ 0,9 % en masse.

7. Composition de charge de verre selon la revendication 6, dans laquelle ledit fer est ajouté de manière à produire dans le verre une concentration de fer total de 0,75 % à environ 0,85 % en masse.

8. Composition de charge de verre selon l'une quelconque des revendications 1 à 7, dans laquelle la valeur ferreuse dans le verre est d'environ 24 % à environ 27 %.

9. Composition de charge de verre selon l'une quelconque des revendications 1 à 8, dans laquelle ledit carbone représente environ 0,035 kg à environ 0,20 kg (environ 0,3 à environ 0,5 livre) pour 390 kg (1 000 livres) de verre.

10. Composition de charge de verre selon la revendication 8, dans laquelle ledit carbone représente environ 0,059 kg à environ 0,20 kg (0,15 livre à environ 0,5 livre) pour 390 kg (1 000 livres) de verre.

11. Composition de charge de verre selon l'une quelconque des revendications 1 à 10 comprenant en outre une quantité de dioxyde de titane, dans laquelle le verre résultant contient d'environ 0,5 à environ 0,6 % en masse de CeO₂ et d'environ 0,15 à environ 0,25 % en masse de TiO₂.

12. Vitrage produit à partir de la composition de charge de verre selon l'une quelconque des revendications 1 à 11, dans lequel le facteur de transmission de la lumière visible de la source de lumière A dudit vitrage est supérieur à 70 %, le facteur de transmission de l'énergie solaire totale dudit vitrage est inférieur à environ 46 % et le facteur de transmission des radiations ultraviolettes dudit vitrage est inférieur à environ 34 %, pour une épaisseur de 4 mm.

13. Vitrage de véhicule produit à partir de la composition de charge de verre selon l'une quelconque des revendications 1 à 11, dans lequel ledit vitrage a une épaisseur de 4 mm, un facteur de transmission de la lumière visible de la source de lumière A supérieur à 70 %, un facteur de transmission de l'énergie solaire totale inférieur à environ 46 %, un facteur de transmission des radiations ultraviolettes inférieur à environ 34 %, une longueur d'onde dominante de la source de lumière C d'environ 498 à environ 518 nm et une pureté de couleur d'environ 2 % à environ 3 %.

14. Procédé pour faire fondre une composition de verre de soude-chaux-silice de couleur verte absorbant l'énergie infrarouge et les radiations ultraviolettes, la composition ayant, lorsqu'elle est fondue, une valeur ferreuse d'environ 22 % à environ 29 %, comprenant le mélange et le chauffage :
A) d'un mélange de charge de verre flotté de soude-chaux-silice conçu pour la coulée continue dans un procédé de flottage de verre ;
B) d'une quantité absorbant les radiations ultraviolettes d'un composé contenant du cérium en une quantité qui n'influe sensiblement pas sur la couleur du verre tout en conférant une capacité d'absorption des ultraviolets au produit en verre fini ;
C) d'une quantité de fer telle qu'il en résulte au moins 0,75 à 1,2 % en masse de fer total dans le verre ; et
D) d'une quantité de carbone de 0,068 à 0,318 kg pour 454 kg (0,15 à 0,7 livre pour 1000 livres) de verre, qui est inférieure à la quantité de carbone nécessaire pour obtenir la même valeur ferreuse dans un verre produit à partir d'une composition de charge de verre comprenant les ingrédients A, B et une moindre quantité de fer que celle indiquée en C) ;
pour éviter ainsi la formation d'une écume de silice sur la surface de la masse fondue en une quantité suffisante pour avoir un effet néfaste sur la qualité du verre formé par le procédé de flottage.

15. Procédé pour faire fondre une composition de verre selon la revendication 14, dans lequel ledit mélange de charge de verre de soude-chaux-silice comprend :
A) 454 ± 91 kg (1 000 ± 200 livres) de sable ;
B) 150 ± 23 kg (330 ± 50 livres) de soude calcinée ;
C) 113 ± 23 kg (250 ± 50 livres) de dolomie ;
D) 32 ± 23 kg (70 ± 50 livres) de chaux ; et
E) 5,4 ± 3,6 kg (12 ± 8 livres) d'un sulfate choisi dans le groupe consistant en le salignon et le gypse.

16. Procédé pour faire fondre une composition de verre selon la revendication 14 ou 15, dans lequel ledit composé contenant du cérium est choisi dans le groupe consistant en le carbonate céreux, l'oxyde cérique, l'oxalate céreux et l'hydrate cérique.

17. Procédé pour faire fondre une composition de verre selon la revendication 16, dans lequel ledit composé contenant du cérium est le carbonate céreux.

18. Procédé pour faire fondre une composition de verre selon l'une quelconque des revendications 14 à 17, dans lequel ledit composé contenant du cérium est ajouté de manière à produire une concentration d'oxyde de cérium dans le verre d'environ 0,8 % à environ 1,2 % en masse.

19. Procédé pour faire fondre une composition de verre selon l'une quelconque des revendications 14 à 18, dans lequel ledit fer est ajouté de manière à produire une concentration de fer total dans le verre de 0,75 % à environ 0,9 % en masse.

20. Procédé pour faire fondre une composition de verre selon la revendication 19, dans lequel ledit fer est ajouté de manière à produire une concentration de fer total dans le verre de 0,75 % à environ 0,85 % en masse.

21. Procédé pour faire fondre une composition de verre selon l'une quelconque des revendications 14 à 20, dans lequel la valeur ferreuse dans le verre est d'environ 24 % à environ 27 %.

22. Procédé pour faire fondre une composition de verre selon l'une quelconque des revendications 14 à 21, dans lequel ledit carbone représente d'environ 0,035 kg à environ 0,20 kg (environ 0,3 à environ 0,5 livre) pour 390 kg (1 000 livres) de verre.

23. Procédé pour faire fondre une composition de verre selon la revendication 22, dans lequel ledit carbone représente d'environ 0,059 kg à environ 0,20 kg pour 390 kg (environ 0,15 livre à environ 0,5 livre pour 1 000 livres) de verre.

24. Procédé pour faire fondre une composition de verre selon l'une quelconque des revendications 14 à 23, comprenant en outre le mélange et le chauffage d'une quantité de dioxyde de titane, dans lequel le verre résultant contient d'environ 0,5 à environ 0,6 % en masse de CeO₂ et d'environ 0,15 à environ 0,25 % en masse de TiO₂.
